# EUROPEAN PATENT APPLICATION

(11) **EP 4 286 548 A1**
(43) Date of publication of application: **06.12.2023**
(21) Application number: 21721961.7
(22) Date of filing: 28.01.2021
(51) Int. Cl.: C22B 3/18, C22B 11/00, C22B 7/00

(54) **METHOD FOR BIOLOGICAL RECOVERY OF METALS FROM ELECTRICAL AND ELECTRONIC WASTE**

(71) Applicant: Universitat Politècnica De Catalunya, 08034 Barcelona (ES)
(72) Inventor: DORADO CASTAÑO, Antonio David, 08250 Sant Joan de Vilatorrada (ES); GAMISANS NOGUERA, Xavier, 08241 Manresa (ES); SOLÉ SARDANS, Montserrat, 08242 Manresa (ES); LAO LUQUE, Concepción, 08272 Sant Fruitós de Bages (ES); MIQUEL GRAU, Ramon, 08259 Fonollosa (ES); ESCOBET CANAL, Antoni, 08600 Berga (ES); ESCOBET CANAL, Teresa, 08670 Navàs (ES)
(74) Representative: Torner, Juncosa I Associats, SL
(86) International application number: PCT/ES2021/070069
(87) International publication number: WO 2022/162252

(57) **Abstract**

The present invention relates to a method for the biological recovery of metals in electric and electronic waste, which comprises a) inoculating a series of iron-oxidizing microorganisms and a mineral medium or fertilizers into an immobilized biomass column; b) performing a stage of biological oxidation of the iron II ions present in said mineral medium or fertilizers to iron III ions; c) irrigating a liquid phase into leaching columns that house an electrical material or one or more printed circuit boards from which metals are to be recovered, the iron III ions being reduced to iron II oxidizing the metals, and separating the metals by means of the dissolution thereof; and d) extracting the metals from the solution. The invention operates under a cyclic process that allows the iron II solution being re-circulated to the biomass column.

## Description

### Technical Field

The present invention relates generally to methods for recycling electric and electronic waste. In particular, the invention relates to a method for the biological recovery of metals in electric and electronic waste, for example from printed circuit boards (PCBs) (for example, from mobile telephones, among others) or from any electrical material in general.

### Background of the Invention

Printed circuit boards (PCBs) are common components in most electrical and electronic equipment. Electric and electronic waste consisting of discarded computers, televisions, mobile telephones, music equipment, and other electronic equipment have become a significant problem worldwide. Rapid technological advancements cause electrical and electronic products to become obsolete within a short period of time. This, together with the exploding sales of consumer electronics, means that more products are being discarded, even though they still work. One of the main problems with this type of electric and electronic waste is that they are filled with toxic chemicals such as arsenic, lead, mercury, polychrome flame retardants, among others. Moreover, the electric and electronic waste also contains a significant part of valuable metals such as copper, silver, or gold, which may be recovered to be reused.

Chemical methods are generally used for recovering these metals from the mineral matrix or plastic (electronic waste) matrix. Finally, bioleaching has been tested as an alternative to chemical processes, showing significant advantages such as a low cost, high efficiency, and environmental friendliness.

Bioleaching is based on the release of metals from metallic concentrates, such as electric and electronic waste, using microorganism activity.

Some patents or patent applications in this sector are known.

For example, document CN105734284A discloses a bioleaching treatment of PCB electronic waste, promoted by means of using biocarbon. According to the method, through oxidation-reduction radicals in the biocarbon, the metal copper in the PCB is bioleached by Fe <2+> microorganisms. The oxidation-reduction capability of the biocarbon and the bioleaching are combined, so that the Fe <2+> is oxidized to obtain Fe <3+>, and the leaching rate of the copper metal is increased.

Documents CN103898550, CN102091711, and CN202519343 are based on using acidophilic bacteria, Acidithiobacillus, for leaching copper. Patent CN104328280 describes a method and equipment to perform bioleaching with *Acidithiobacillus ferrooxidans* for extracting copper, gold, and nickel from PCBs. In patent CN104862475, bioleaching with *Acidithiobacillus ferrooxidans* was improved by means of the proliferation of the bacterium under conditions of low dissolved oxygen level to maximize growth, and then increasing the oxygen concentration when PCBs are added to maximize copper leaching. The application of patent CN105039704 is based on bioleaching with *Thiobacillus acidophilus* (reclassified as *Acidiphilium acidophilum*) for copper extraction.

CN103397195A discloses a recovery device and a recovery method of metallic copper of a waste printed circuit board. The device comprises a microbial fuel cell, a reactor for leaching copper of the waste printed circuit board and an Fe<2+> biological oxidation reactor. The recovery method comprises: firstly, iron-oxidizing bacteria in the Fe<2+> biological oxidation reactor oxidizes Fe<2+> into Fe<3+>; then the solution containing Fe<3+> is inputted into the reactor for leaching copper of the waste printed circuit board, the metallic copper is oxidized into Cu<2+> by Fe<3+>, and at the same time, Fe<3+> is reduced into Fe<2+>; and finally, the solution containing Cu<2+> is inputted into a cathode chamber of the microbial fuel cell, Cu<2+> is reduced into the metallic copper in the cathode chamber of the microbial fuel cell, while Fe<2+> in the cathode chamber of the microbial fuel cell is inputted to the Fe<2+> biological oxidation reactor and then is oxidized into Fe<3+>. CN107746959B discloses a two-step biological leaching method for full-value recycling of valuable metals in a waste circuit board. The method comprises the following steps that S1, pretreatment is conducted, specifically, the waste circuit board is smashed and then sorted, and thus metal particles are obtained; S2, leaching of the non-ferrous metals is conducted, specifically, an ore-leaching microorganism is cultured in a culture medium containing Fe2+, so that Fe2+ is converted into Fe3+, then Fe3+ reacts with the metal particles in the step S1, and thus non-ferrous metal leachate and precious metal residues are obtained; S3, leaching of precious metals is conducted, specifically, the precious metal residues in the step S2 react with a precious metal leaching agent solution formed by the mode that lime water absorbs HCN, and thus precious metal leachate is obtained; and S4, the non-ferrous metal leachate in the step S2 and the precious metal leachate in the step S3 are extracted and recycled correspondingly.

Finally, international patent application WO 03006696 discloses a method for extracting zinc from a mineral with sulfur which comprises bioleaching the mineral with acidophilic microorganisms.

### Summary of the Invention

Embodiments of the present invention provide a method for the biological recovery of metals in electric and electronic waste. The method comprises inoculating a series of aerobic iron-oxidizing microorganisms and a mineral medium formed by different salts in solution or fertilizers into an immobilized biomass column (i.e. a fixed bed bioreactor); and performing, in the biomass column, a first stage of biological oxidation of the iron II ions present in the mineral medium or fertilizers to iron III ions. The first step is catalyzed by the metabolic activity of the iron-oxidizing microorganisms and performed within a previously fixed range of temperature, controlling the pH of the mineral medium or fertilizers. Particularly, the first step lasts for at least two hours.

Next, a liquid phase comprising the iron III ions is irrigated into at least one leaching column with dimensions suitable for housing one or more printed circuit boards of an electrical material or of an electronic waste from which metals are to be recovered, the iron III ions in contact with the liquid phase being reduced to iron II oxidizing the metals, and the metals of interest being separated by means of the dissolution thereof. Particularly, the printed circuit board or boards are in contact with the liquid phase inside the leaching column(s) for at least one hour. Finally, the metals of interest are extracted from the solution. It should be noted that in other embodiments, instead of the printed circuit board (or boards), the leaching column(s) can house any electrical material from which the metals are to be recovered.

Particularly, the different steps of the proposed method are performed continuously.

In an embodiment, once the first stage has been performed, the iron-oxidizing microorganisms that have been detached from the biomass column are separated, out of the biomass column, providing a solid phase comprising the iron-oxidant microorganisms and the cited liquid phase comprising the iron ions III.

The solid phase with the iron-oxidizing microorganisms can be recirculated (or returned again) to the biomass column.

In other embodiments, instead of or in addition to being performed within a previously fixed range of temperature, the first stage can be performed with oxygen and/or redox control.

The mentioned previously fixed range of temperature can be comprised between 25 and 35ºC, preferably 30ºC.

In one embodiment, a structuring agent which facilitates liquid percolation is additionally used when the mentioned electrical material or the mentioned printed circuit board or boards are contacted with the leaching liquid. This structuring agent can be the actual plastic material of the printed circuit board/boards.

In one embodiment, leaching liquid renewal cycles are performed in the mentioned leaching column(s) and the printed circuit board/boards (or said electrical material) are stirred. The required time is thereby reduced and better biological recoveries obtained. Alternatively, in another embodiment, the printed circuit board/boards can be static inside the leaching column(s), i.e. not stirred, such as a heap-leach-process.

In one embodiment, when the metals of interest have been extracted from the solution, they are reduced from soluble state to metallic state by means of a cementation process which provides a spontaneous reaction between soluble copper II, extracted from the electrical material or from the printed circuit board or boards, and the metallic iron. In the mentioned spontaneous reaction, the soluble copper II is reduced to copper metal and the metallic iron is oxidized to soluble iron II. In this embodiment, the cementation process is performed in a tank mechanically stirred at a speed comprised in a range of 120 to 140 rpm at room temperature.

In another embodiment, the reduction of the extracted metals of interest to metallic state is performed by means of electrolysis using stainless steel or lead electrodes. In another embodiment, the reduction can be made by means of a precipitation technique.

In one embodiment, the method further performs an automatic tracking of the biological oxidation of the iron II ions to iron III ions and/or an automatic tracking of a metal extraction (for instance copper, among any other metal) in the leaching column(s) by means of one or more optical sensors that continuously and non-invasively monitor a color change of the liquid of the leaching column(s) as a result of the solubilization of the metals being extracted. Both trackings can be performed simultaneously.

In one embodiment, at least the tracked biological oxidation is processed, calibrated and/or diagnosed using a processing unit operatively connected to the optical sensor(s).

In one embodiment, the irrigation is performed in batches that are programmed and controlled using an automatic control system/device with hardware and software programmable components.

In one embodiment, two leaching columns are used. In this case the two leaching columns can be synchronized using the automatic control system/device. The leaching columns can automatically exchange the liquid phase from one column to the other via the automatic control device. The automatic control device is operatively connected to the mentioned optical sensor(s). Thus, in a particular embodiment, the change from one column to the other is made in view of the color change detected by the optical sensor(s), as explained before.

In one embodiment, when the metals of interest have been extracted from the solution, the obtained soluble iron II is re-circulated to the first stage of biological oxidation to reduce the amount of iron required therein, i.e. the process is cyclic. Likewise, to improve contact between the electrical material or electronic waste and the iron III ions, and to assure that all the incoming iron III ions react with the metals, the iron III ions can also be re-circulated from a lower part of the leaching column(s) to an upper part thereof.

In one embodiment, the different salts of the mineral medium include an iron II salt and salts that provide nitrogen, sulfur, phosphorus, magnesium, potassium, and calcium. Particularly, the composition of the mineral medium comprises: 15-60g/L of FeSO₄ · 7 H₂O, 3 g/L of (NH₄)₂SO_{4;} 0.5 g/L of MgSO₄ · 7H₂O, 0.5 g/L of K₂HPO₄, 0.10 g/L of KCI and 0.01 g/L of Ca(NO₃)₂ · 4 H₂O. Likewise, the pH of the mineral medium can be controlled in a range between 1.7 and 1.8 by means of adding an acid or a base, for example, by means of adding sulfuric acid at a concentration of 10%.

In some embodiments, iron scrap can be used as iron source.

In one embodiment, tracking of the activity of the iron-oxidizing microorganisms in the biomass column is furthermore performed, for example by means of:
- extracting and cleaning a support material, e.g. a (solid) piece of sample, from the biomass column;
- preparing a solution with the same mineral medium composition but without the iron salt FeSO₄ · 7 H₂O;
- extracting a specific amount of sample, preferably 2 ml, from a liquid resulting from the cleaning of the support material and centrifuging for 10 minutes at 5000 rpm;
- eliminating the surplus and adding another specific amount, preferably 2 ml, of the mineral medium but without the iron salt FeSO₄ · 7 H₂O;
- stabilizing the temperature by putting the sample in a thermostatic bath at 30ºC;
- adding a specific amount, preferably 2 ml, of the mineral medium with the iron salt FeSO₄ · 7 H₂O and performing homogenization;
- extracting a specific amount, preferably 1 ml, of the mineral medium and introducing it in a container which is again placed in said thermostatic bath under mechanical stirring;
- introducing an oxygen microsensor in said container until contacting the sample or introducing the sample in said container with a sensor, for example an optical sensor, adhered thereto; and
- recording the progression of the oxygen concentration by means of said microsensor or by means of said sensor and determining the biological activity of the sample based on the time progression slope obtained.

Likewise, the activity of the sample can be linked with the concentration of iron-oxidizing microorganisms (i.e., biomass) by means of a prior calibration, for example by means of determining the biological activity of several known concentrations of biomass and correlating them with said activity and concentration parameters.

In one embodiment, calibration of the oxygen microsensor in an oxygen-free aqueous medium and under saturation conditions at a constant temperature is also performed.

In one embodiment, the mentioned step of irrigation is performed at room temperature and at a pH less than 1.8.

### Brief Description of the Drawings

The foregoing and other features and advantages will be better understood based on the following detailed description of several merely illustrative non-limiting embodiments in reference to the attached drawings, in which:
Fig. 1 is a flow chart illustrating a method for the biological recovery of metals in electric and electronic waste, according to an embodiment of the present invention.
Fig. 2 schematically illustrates the proposed bioleaching plant for implementing the proposed method.

### Detailed Description of Several Embodiments

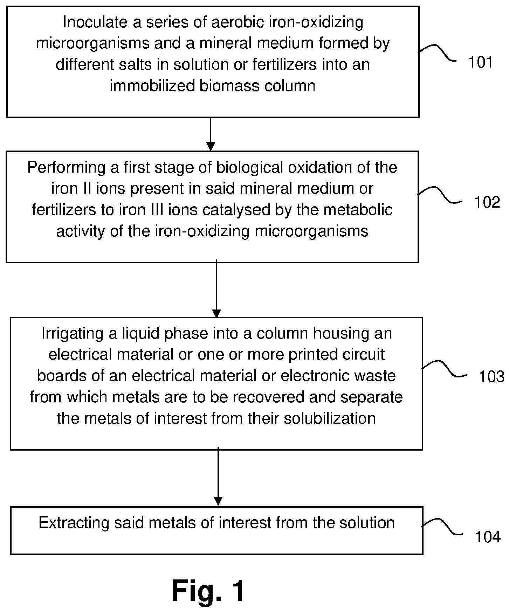

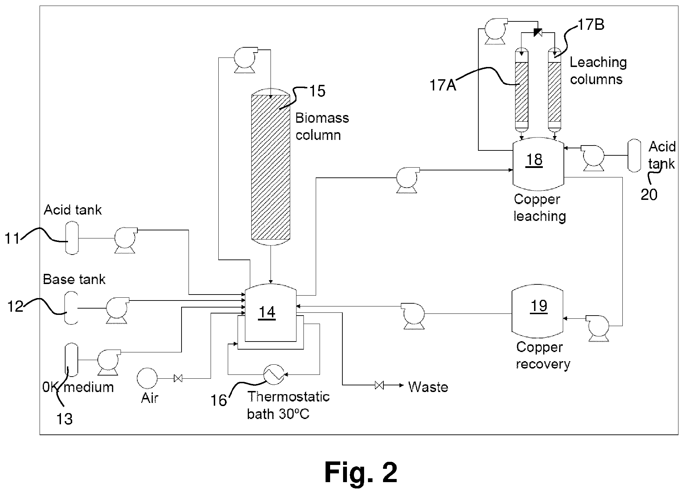

With reference to Fig. 1, therein it is shown an embodiment of the proposed method for the biological recovery of metals in electric and electronic waste. As seen in the figure, in step 101, a series of aerobic iron-oxidizing microorganisms and a mineral medium formed by different salts in solution or fertilizers such as NPK are introduced into an immobilized biomass column 15 (see Fig. 2). Next, in step 102, a first stage of biological oxidation of the iron II ions present in the mentioned mineral medium or fertilizers to iron III ions is performed in the biomass column 15. This first stage is catalyzed by the metabolic activity of the iron-oxidizing microorganisms and performed within a previously fixed range of temperature between 25 and 35ºC, preferably 30ºC, controlling the pH of the mineral medium or fertilizers. The first stage particularly lasts for at least two hours to enable assuring proper contact between the microorganisms and the iron II solution. Subsequently, in step 103, a liquid phase comprising iron III ions is irrigated into two leaching columns 17A, 17B arranged for housing one or more printed circuit boards of the electrical material or electronic waste, the iron III ions being reduced to iron II oxidizing the metals, and the metals of interest are separated by means of the dissolution thereof. Finally, in step 104, the metals of interest are extracted from the solution. It should be noted that the method is effective using a one leaching column only.

In an embodiment, the iron-oxidizing microorganisms that have been detached from the biomass column 15 are separated out of the biomass column 15, thereby providing a solid phase comprising the iron-oxidizing microorganisms and the cited liquid phase comprising the iron III ions.

It should be noted that instead of the mentioned printed circuit board (or boards), the leaching column(s) can house any electrical material from which the metals are to be recovered.

With reference now to Fig. 2, therein an embodiment of the proposed bioleaching plant used for carrying out the proposed method is shown. A key difference compared to the known bioleaching plants is that in this case the biomass column 15 is immobilized.

The biomass column 15 consists of a column packed with polyurethane foam or other filling material that allows the immobilization of the biomass responsible for the oxidation of the iron II ions to iron III ions. On this column 15, the solution of iron II ions that the microorganisms oxidize to iron III ions is recirculated by means of a collector 14 at the bottom of the column 15 that collects the leachate and allows it to recirculate by means of a pump to the top of the column 15.

A sprinkler allows the distribution of the liquid. The collector 14 has an input and output port for working in continuous mode. This collector 14 measures and controls the pH below 1.8 units, as well as dissolved oxygen and redox potential and is heated by a resistance or heating/ thermostatic bath 16 that ensures an optimum temperature of the biomass (no less than 30º). A venturi ejector is installed in the recirculation line that allows the suction of air through the circulation of the liquid itself, which ensures the availability of oxygen and the carbon source necessary for the maintenance of microbial activity. Ventilation can also be done from compressed air and diffusers or any other equivalent system. In the column 15, the pressure losses are measured to ensure that there is no clogging due to excessive growth. The column 15 has ports that allow the punctual extraction of fragments/pieces of supporting material to perform microrespirometric of the immobilized biomass and ensure that the biological activity is optimal during the operation.

The operation of the fixed biomass reactor 15 allows several advantages such as reducing the volume of the reactor, increasing the specific production rate of the leachate Fe (III), a much clearer liquid that generates less precipitate and minimize the loss of biomass at the outlet of the bioreactor 15 as the biomass is retained inside and a subsequent decanter is not required (decrease in auxiliary equipment).

Tank 11 is a tank of an acid solution that allows controlling the pH and is activated when the pH exceeds 1.8 units. Tank 12 on the contrary raises the pH if it goes down too much; this tank 12 provides a base. This same function is performed by the acid tank 20 for the leaching columns 17A, 17B. Tank 13 is a tank of mineral medium that compensates for the closed cycle by any losses that may occur (by evaporation, for example) or the purge that is done periodically (Waste as indicated in Fig. 2).

The iron source can be introduced in the form of a solution of iron salts (FeSO₄) or through residual material with iron content from other industrial processes that in working conditions dissolve and generate a continuous source of iron to generate the leachate. Preferably, the biomass column is continuously fed with a mineral medium with the following composition: 15-60g/L of FeSO₄ · 7 H₂O, 3 g/L of (NH₄)₂SO_{4;} 0.5 g/L of MgSO₄ · 7H₂O, 0.5 g/L of K₂HPO₄, 0.10 g/L of KCI and 0.01 g/L of Ca(NO₃)₂ · 4 H₂O. It should be noted that other mineral media or different compositions may also be used.

The biomass column 15 also allows the biological production of acid as a leaching agent from by-products or residues with sulfur as energy source for *Acidithiobacillus ferrooxidans* and/or *Acidithiobacillus thiooxidans* (e.g. biogas desulfurization).

To prepare the mineral medium (about 1 liter), all the salts (except the iron salt) are dissolved in 700 ml of deionized water and the pH of this solution is adjusted to 1.75 with 10% sulfuric acid, for example. The iron salt is then dissolved in 300 ml of deionized water and the pH of this solution is adjusted to 1.75, also with 10% sulfuric acid. Finally, the two solutions are pooled and the pH result is verified, and where necessary, re-adjusted again to a pH of 1.75 with 10% sulfuric acid.

The tracking of the activity of the iron-oxidizing microorganisms in the biomass column 15 can be performed by means of microrespirometric (oxygen consumption) techniques, for example by extracting and washing one or more pieces of support material from the biomass column 15; preparing a solution with the same mineral medium composition but without the iron salt FeSO₄ · 7 H₂O; extracting a specific amount of sample, preferably 2 ml (this is non-limiting as other amounts may be extracted) from the liquid resulting from the washing of the piece(s), and centrifuging for about 10 minutes at 5000 rpm; eliminating the surplus and adding another specific amount, preferably also 2 ml, of the mineral medium but without the iron salt FeSO₄ · 7 H₂O; stabilizing the temperature by putting the sample in the thermostatic bath at about 30ºC; adding another specific amount, preferably 2 ml, of the mineral medium with the iron salt FeSO₄ · 7 H₂O and performing homogenization; extracting a specific amount, preferably 1 ml, of the mineral medium and introducing it in a container which is again placed in the thermostatic bath under mechanical stirring; introducing an oxygen microsensor into the container until contacting the sample, or alternatively, directly introducing the sample into the container with a sensor, for example an optical sensor, adhered thereto; and recording the progression of the oxygen concentration by means of the microsensor or the sensor and determining the biological activity of the sample based on the time progression slope obtained.

The preceding process allows detecting the activity of the iron-oxidizing microorganisms with very small volumes of sample of less than 2 mL of sample.

The oxygen microsensor can be calibrated in an oxygen-free aqueous medium (nitrogen shift) and under saturation conditions (oxygenating by means of a diffuser until achieving a stable signal) at constant temperature.

During the operation of the plant, the leaching columns 17A, 17B are irrigated with the iron III solution such that the boards contact the solution and the chemical reaction which allows extracting the metals of interest takes place. To improve the contact between the waste and iron III and to assure that all the iron III reacts with the metals, preferably part of the leachate obtained in the lower part of the leaching columns 17A, 17B is re-circulated again to the upper part of the leaching columns 17A, 17B by means of a collector 18 at the bottom of the columns 17A, 17B. A contact time inside the leaching columns 17A, 17B of at least one hour is required to assure an efficient leaching of the metals contained in the printed circuit board/boards.

To facilitate leachate percolation, a structuring agent can additionally be used when performing the mentioned contact.

Likewise, liquid renewal cycles can be performed in the leaching columns 17A, 17B, stirring the boards. The required time is thereby reduced and better biological recoveries obtained.

The process takes place at room temperature and at a pH below 1.8. It is important to keep the pH below this value to prevent iron III precipitation which would reduce the effectiveness of the process, and therefore the effectiveness of the metal extraction. To carry out this pH adjustment, pH control in the liquid re-circulated to the leaching columns 17A, 17B can be performed.

Although not shown in Fig. 2, the bioleaching plant can also include a detection system formed by one or more optical sensors that is attached to or near the biomass column 15 and/or leaching columns 17A, 17B. The optical sensor(s) are configured to continuously, and non-invasively, monitor color changes associated with the dissolution of metals and the degree of progress of oxidation reactions and reduction of metals. The detection system detects the completion of reactions and solutions to make decisions in the automation and control of the bioleaching plant. This detection reduces waiting times in the integration of the different stages of the process. The operating mechanism can be based on a light emitter and a programmable sensor RGB (red-blue-green detector) and IR (infrared) with a microprocessor that allows the processing of digital analysis, self-calibration and self-diagnosis. The light detection system can be performed by transmission or by reflection using self-reflective photocells. In some embodiments, these elements can be integrated and assembled on a platform adapted to the biomass column 15 to be monitored and protected with a watertight casing.

The optical sensors can be configured to perform the tracking of the biological oxidation of the iron II ions to iron III ions simultaneously to the tracking of a metal extraction, e.g. copper, among other metals such as tin, nickel, manganese, silver, aluminum, cobalt, indium, gold, lead, osmium, dysprosium, etc. in the leaching columns 17A, 17B.

The reduction of the metals from soluble to metallic state can be made using different techniques. In an embodiment, the reduction is performed by electrolysis with 316L stainless steel electrodes for both the cathode and the anode and a liquid recirculation system that allows gentle agitation without magnetic or mechanical elements. A power supply is used where voltage and current are controlled. In other embodiments, lead electrodes, among others, can be used for performing the electrolysis.

Alternatively, the reduction can be made via a cementation process. This process consists of the spontaneous reaction between soluble copper II and metallic iron, in which the copper is reduced to a metallic copper and the iron is oxidized to a soluble iron II. An electrorefining can additionally be performed to achieve a higher purity.

The recovery of metals in a metallic state by precipitation is also contemplated.

The bioleaching plant can be automatically controlled by means of an automatic control system/device (not shown in Fig. 2). This automatic plant control system can record the main process variables (pH, OD, redox) and the measurement of the liquid levels of the leaching columns 17A, 17B to act on the pumps and solenoid valves that allow optimal sequencing between the units without downtime and increasing productivity. The control device allows the automatic integration of the different elements, minimizes the times of work, and corrects any deviation that may arise. Decision making is integrated with the above-cited detection system, such as the automatic tracking system for color change reactions. Besides it allows a start-up of the automatic bioleaching plant. It also allows the semi-continuous stage of leaching to occur in programmable batches between loads and discharges of the waste to be recovered without the system ceasing to produce continuously.

It should be noted that the bioleaching plant operates under a cyclic process that allows the iron II solution being re-circulated to the biomass column 15; therefore, the need for iron of the biological process is reduced.

The scope of the present invention is defined in the attached claims.

## Claims

1. A method for the biological recovery of metals in electric and electronic waste, comprising:
a) inoculating a series of aerobic iron-oxidizing microorganisms and a mineral medium formed by different salts in solution or fertilizers into an immobilized biomass column (15);
b) performing, in said biomass column (15), a first stage of biological oxidation of iron II ions present in said mineral medium or fertilizer to iron III ions, the first stage being catalyzed by the metabolic activity of the iron-oxidizing microorganisms and performed within a previously fixed range of temperature, controlling the pH of said mineral medium or fertilizers, the first stage lasting for at least two hours;
c) irrigating a liquid phase comprising the iron III ions into at least one leaching column (17A, 17B) configured for housing an electrical material or one or more printed circuit boards of an electrical material or electronic waste from which metals are to be recovered, the iron III ions being reduced to iron II oxidizing the metals, and separating the metals of interest by means of the dissolution thereof, the electrical material or the printed circuit board or boards being in contact with the liquid phase inside the leaching column (17A, 17B) for at least one hour; and
d) extracting the metals of interest from the solution.

2. The method of claim 1, wherein previous to step c) the method comprises separating the iron-oxidizing microorganisms that has been detached from the biomass column (15) out of the biomass column (15), a solid phase comprising the iron-oxidizing microorganisms and the liquid phase comprising the iron III ions.

3. The method according to claim 1 or 2, wherein step d) comprises reducing said extracted metals of interest from soluble state to metallic state through a cementation process which provides a spontaneous reaction between soluble copper II, extracted from the electrical material or from the printed circuit board or boards, and the metallic iron, wherein in said spontaneous reaction the soluble copper II is reduced to copper metal and the metallic iron is oxidized to soluble iron II.

4. The method according to claim 1 or 2, wherein step d) comprises reducing the extracted metals of interest from soluble state to metallic state through electrolysis using stainless steel or lead electrodes.

5. The method according to any one of the previous claims, further comprising automatically tracking the biological oxidation of the iron II ions to iron III ions and/or a metal extraction in the at least one leaching column (17A, 17B) using one or more optical sensors that continuously and non-invasively monitor a color change of the liquid of the leaching column(s) (17A, 17B) as a result of the solubilization of the metals being extracted.

6. The method according to claim 5, wherein both trackings are executed simultaneously.

7. The method according to claim 5, wherein at least the tracked biological oxidation is further processed, calibrated and/or diagnosed using a processing unit operatively connected to the optical sensor(s).

8. The method according to any one of the previous claims, wherein the irrigation of step c) is performed in batches programmed and controlled using an automatic control device.

9. The method according to any one of the previous claims, wherein in step c) the liquid phase is irrigated into two leaching columns (17A, 17B), which automatically exchange the liquid phase from one column to the other by means of the automatic control device.

10. The method according to any one of the previous claims, wherein the different salts of the mineral medium include an iron II salt and salts that provide nitrogen, sulfur, phosphorus, magnesium, potassium, and calcium.

11. The method according to claim 10, wherein said mineral medium comprises the following composition: 15-60g/L of FeSO₄ · 7 H₂O, 3 g/L of (NH₄)₂SO_{4;} 0.5 g/L of MgSO₄ · 7H₂O, 0.5 g/L of K₂HPO₄, 0.10 g/L of KCI and 0.01 g/L of Ca(NO₃)₂ · 4 H₂O.

12. The method according to any one of the preceding claims, further comprising tracking the activity of said iron-oxidizing microorganisms in the immobilized biomass column (15) in said step b) by means of performing the following steps:
extracting and cleaning a support material from the biomass column (15);
preparing a solution with the same mineral medium composition but without the iron salt FeSO₄ · 7 H₂O;
extracting a specific amount of sample, preferably 2 ml, from a liquid resulting from the cleaning of the support material and centrifuging it for 10 minutes at 5000 rpm;
eliminating the surplus and adding another specific amount, preferably 2 ml, of the mineral medium but without the iron salt FeSO₄ · 7 H₂O;
stabilizing the temperature by putting the sample in a thermostatic bath (16) at 30ºC;
adding another specific amount, preferably 2 ml, of the mineral medium with the iron salt FeSO₄ · 7 H₂O and performing homogenization;
extracting a specific amount, preferably 1 ml, of the mineral medium and introducing it in a container which is again placed in said thermostatic bath (16) under mechanical stirring;
introducing an oxygen microsensor in said container until contacting the sample or introducing the sample in said container with a sensor adhered thereto; and
recording the progression of the oxygen concentration via said microsensor or said sensor and determining the biological activity of the sample based on the time progression slope obtained.

13. The method according to claim 12, further comprising:
linking the activity of the sample with the concentration of iron-oxidizing microorganisms by means of a prior calibration; and/or
calibrating the oxygen microsensor in an oxygen-free aqueous medium and under saturation conditions at a constant temperature.

14. The method according to claim 1, wherein step c) further comprises re-circulating iron III from a lower part of the at least one leaching column (17A, 17B) to an upper part thereof, step c) being performed at room temperature and at a pH less than 1.8.

15. The method according to any one of the preceding claims, wherein the method further comprises: e) recirculating the solution to the biomass column (15).
